# EUROPÄISCHE PATENTSCHRIFT

(11) **EP 0 983 878 B1**
(45) Veröffentlichungstag und Bekanntmachung des Hinweises auf die Patenterteilung: **02.05.2003**
(21) Anmeldenummer: 99113764.7
(22) Anmeldetag: 14.07.1999
(51) Int. Cl.: B60C 25/00, B60S 5/00, B60S 3/04, A47F 7/04, B60B 29/00

(54) **Verfahren und Einrichtung zur Überprüfung, Pflege und Lagerung von Kraftfahrzeugrädern**
Method and device for testing, maintaining and storing vehicle wheels
Procédé et dispositif pour le test, la maintenance et le stockage de roues de véhicule

(30) Priorität: 04.09.1998 DE 29815892 U
(43) Veröffentlichungstag der Anmeldung: 08.03.2000
(73) Patentinhaber: 4 Wheels Service + Logistik GmbH, 40211 Düsseldorf (DE)
(72) Erfinder: Vogl, Heinz W., 41352 Korschenbroich (DE)
(74) Vertreter: Paul, Dieter-Alfred, Dipl.-Ing.

(56) Entgegenhaltungen:
- WO-A-90/11210
- WO-A-94/09688
- DE-A- 3 134 517
- FR-A- 2 763 281

## Beschreibung

Die Erfindung betrifft ein Verfahren zur Überprüfung, Pflege und Lagerung von Kraftfahrzeugrädern, bei dem die Räder in wenigstens einem Lagergehäuse mit Lagerregalen eingelagert und in einer Reinigungseinrichtung gereinigt werden, wobei in einer EDV-Einrichtung der Ort der Einlagerung und Raddaten erfaßt werden und zusätzlich mittels einer Prüf- und Meßeinrichtung Zustandsdaten über die Räder ermittelt werden und wobei über einen Drucker ein Radprotokoll ausgedruckt wird. Die Erfindung bezieht sich ferner auf eine Einrichtung zur Überprüfung und Pflege von Kraftfahrzeugrädern mit wenigstens einer Reinigungseinrichtung zur Reinigung der Räder , wenigstens einer Prüf- und Meßeinrichtung zur Erfassung von Daten über die Räder und unit wenigstens einer EDV-Einrichtung zur Eingabe von Zustandsdatensützen über jedes Rad.

Zu Beginn des Winters ersetzen viele Inhaber von Kraftfahrzeugen die Sommerreifen durch spezielle Winterreifen. Gegen Ende des Winters werden diese wieder gegen Sommerreifen ausgetauscht. In beiden Fällen besteht das Problem der Lagerung des jeweils nicht gebrauchten Radsatzes. In vielen Fällen erfolgt dies in der privaten Garage. Häufig bieten aber auch die Reifen- und Autohändler die Einlagerung der Reifensätze in Lagerhallen an. Dabei wird in einer zentralen EDV-Einrichtung der Ort der Einlagerung und Raddaten, wie beispielsweise die Größe der Reifen, erfaßt, und es wird über einen Drucker ein Radprotokoll ausgedruckt, das auch den Einlagerungsort enthält. Zusätzlich werden mittels einer Prüf- und Meßeinrichtung Zustandsdaten über die Räder ermittelt. Schließlich werden die Räder auch gereinigt.

In der WO94/06988 ist ein Verfahren und eine Einrichtung zur Überprüfung, Pflege und Lagerung von gebrauchten Kraftfahrzeugrädern offenbart, bei der die Kraftfahrzeugräder in Lagerregalen plaziert und auch gereinigt werden. Außerdem werden die Räder auf Schäden und Verschleiß überprüft, wobei Prüf- und Meßeinrichtungen zum Einsatz kommen. Eine EDV-mäßige Erfassung ist nicht offenbart, da die Einrichtung in erster Linie für die interne Lagerung der Reifen von einem Transportunternehmen gehörenden Kraftfahrzeugen bestimmt ist.

Ein gattungsgemäßes Verfahren nach Anspruch 1 und eine gattungsgemäße Einrichtung nach Anspruch 2 gehören zum Stand der Technik.

Der Erfindung liegt die Aufgabe zugrunde, ein Verfahren und eine Einrichtung zur Überprüfung, Pflege und Lagerung von Kraftfahrzeugrädern bereitzustellen, das bzw. die eine einfache Erfassung von Zustandsdaten der Räder erlaubt.

Eine erste Lösung dieser Aufgabe besteht bei einem gattungsgemäßen Verfahren darin, daß Rad- und Zustandsdaten zunächst in ein tragbares oder auf einem Fahrzeug angeordnetes EDV-Gerät eingegeben und an einen Zentralrechner weitergegeben werden, aus dem eine komplette Liste der eingelagerten Räder mit erfaßten Daten entnehmbar ist. Grundgedanke der Erfindung ist es also, die Rad- und Zustandsdaten zunächst mittels eines tragbaren oder auf einem Fahrzeug angeordneten EDV-Geräts zu erfassen, um sie dann an einen zentralen Rechner weiterzugeben, der in der Lage ist, eine Liste der eingelagerten Räder mit erfaßten Daten zu erstellen. Das auf diese Weise ausgedruckte Radprotokoll kann dem Kunden übergeben werden und versetzt ihn in die Lage, notwendige Maßnahmen zur Pflege und Reparatur der Reifen und Felgen vorzunehmen.

Eine zweite Lösung der genannten Aufgabe besteht bei einer gattungsgemäßen Einrichtung darin, daß die Einrichtung auf einem Kraftfahrzeug angeordnet ist. Das Kraftfahrzeug kann einer Vielzahl von Lagergehäusen zugeordnet sein.

Die Lagergehäuse können mit diesem Kraftfahrzeug abgefahren werden, wobei die zwischen zwei Anfahrten eingelagerten Räder aus dem Lagergehäuse wieder herausgenommen und dann in dem Kraftfahrzeug behandelt werden. Auf diese Weise werden die Reinigungseinrichtung, die Prüf- und Meßeinrichtung und die EDV-Einrichtung besser ausgenutzt.

In Ausgestaltung der Erfindung gemäß der Zweiten Lösung ist vorgesehen, daß die Reinigungseinrichtung eine Reinigungskammer mit Spritzdüsen für eine Reinigungsflüssigkeit aufweist. Der Reinigungskammer zugeordnet ist ein Flüssigkeitstank, aus dem die Flüssigkeit für das Sprühwaschen des jeweils eingestellten Rades genommen wird, sowie ein Abwassertank.

Zur Reinigung sollte auch eine Sprüheinrichtung zum Aufbringen von Felgenreiniger oder anderen Wasch- oder Pflegesubstanzen gehören, wobei die Sprüheinrichtung zweckmäßigerweise vor dem Eingang der Reinigungskammer angeordnet ist. um mehrere Räder puffern zu können, sollte die Reinigungseinrichtung eine Zulaufrinne aufweisen, in der die Räder hintereinander stehend aufreihbar sind. Dabei kann die Sprüheinrichtung zum Aufbringen von Felgenreiniger im Bereich der Zulaufrinne angeordnet sein.

Weiter ist es von Vorteil, wenn die Reinigungseinrichtung eine Trockenblaseinrichtung aufweist. Sie kann in der Reinigungskammer oder auch gesondert vorgesehen sein. Die Trockenblaseinrichtung vermeidet Verschmutzungen bei den nachfolgenden Behandlungsschritten.

Nach der Erfindung gemäß der zweiten Lösung ist ferner vorgesehen, daß die Prüfund Meßeinrichtung einen Prüf- und Meßplatz für die Auflage des jeweiligen Rades aufweist. Er sollte zweckmäßigerweise neben dem Ausgang der Reinigungskammer angeorndet und so ausgebildet sein, daß das betreffende Rad senkrecht stehend gehalten wird. Um die Kontrolle des Rades und auch die Entfernung von Fremdkörpern zu erleichtern, sollte die Radaufnahme um eine vertikale Achse drehbar sein. Auch ist es zweckmäßig, wenn die Radaufnahme drehbar gelagerte Rollen als Auflage für die Räder aufweist, da dies das Drehen des Rades zum Zwecke der Kontrolle und Datenaufnahme erleichtert wird.

Die Prüf- und Meßeinrichtung sollte beispielsweise ein Luftdruckmeßgerät, ein Luftbefüllgerät, ein Profiltiefenmeßgerät und/oder ein Auswuchtgerät aufweisen. Dies ermöglicht es, verschiedene Daten aufzunehmen und ferner das Rad schon vor dem Einlagern mit einem optimalen Luftdruck zu versehen und auszuwuchten. Selbstverständlich besteht die Möglichkeit, auch weitere Meßgeräte vorzusehen, um den Zustand des Rades noch detaillierter zu erfassen.

An die Prüf- und Meßeinrichtung kann sich dann wieder eine Ablaufrinne anschließen, um die Räder einfach aus dem Wasch- und Prüfbereich herauszurollen.

Die EDV-Einrichtung gemäß der zweiten Lösung ist zweckmäßigerweise als tragbares Gerät ausgebildet. Sie sollte einen Barcodeleser aufweisen. Mit Hilfe dieses Lesers können auf einfache Weise Daten aufgenommen werden. Hierzu wird ein Satz von Barcodes zur Verfügung gestellt, die sich jeweils auf eine bestimmte Art von Beschädigung, Abnutzung und Größe beziehen. Außerdem wird die Marke des Reifens und der Felge erfaßt. Zusätzlich kann ein zentraler Rechner vorgesehen sein, der mit mehreren EDV-Einrichtungen verbindbar ist und dem sich dann eine komplette Liste der jeweils eingelagerten Räder mit allen erfaßten Daten entnehmen läßt.

Soweit das Lagergehäuse als beweglicher Container ausgebildet ist, sollte er eine mittig an der Stirnseite angeordnete Tür und zu beiden Seiten eines Ganges Lagerregale aufweisen, um den Raum im Container optimal zu nutzen.

In der Zeichnung ist die Erfindung anhand eines Ausführungsbeispiels näher veranschaulicht. Es zeigen:
- Fig. 1: eine Draufsicht auf einen Container mit abgenommenem Dach;
- Fig. 2: einen Querschnitt durch den Container gemäß Fig. 1 in der Ebene A-A;
- Fig. 3: eine Draufsicht auf ein Kraftfahrzeug mit Reinigungs- sowie Prüf- und Meßeinrichtung.

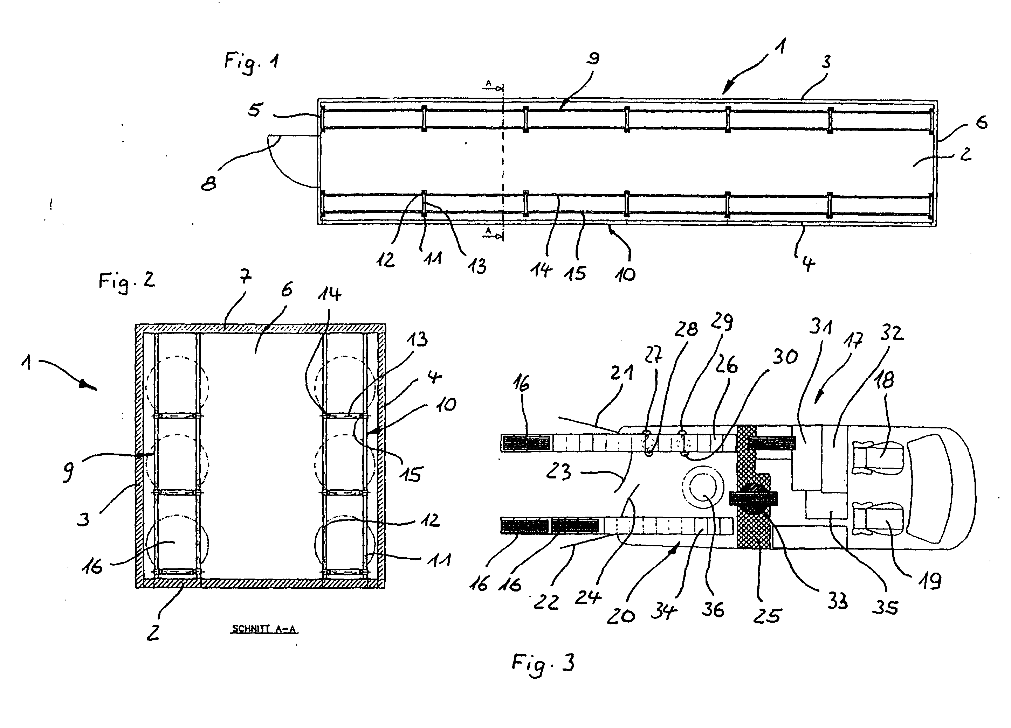

Der in den Figuren 1 und 2 dargestellte Container 1 ist üblicher, normgerechter Bauart. Er hat einen Boden 2, zwei Längswände 3, 4, zwei Stirnwände 5, 6 sowie eine Dachwandung 7. Insbesondere die Längswände 3, 4 können für Reklamezwecke genutzt werden. Auf der Dachwandung 7 können Schienen angeordnet sein, auf denen sich ein Auto zu Werbezwecken abstellen läßt, wobei die Schienen auch drehbar sein können.

Die in Fig. 1 linke Stirnwand 5 weist mittig eine Tür 8 auf, über die sich der Innenraum des Containers 1 begehen läßt. Nahe den Innenseiten der Längswände 3, 4 erstrecken sich zwei Regale 9, 10. Sie haben in Abständen jeweils ein Paar senkrechter Stützen - beispielhaft mit 11, 12 bezeichnet, welche über Querstreben - beispielhaft mit 13 bezeichnet - verbunden sind. Die senkrechten Stützen 11, 12 tragen jeweils drei übereinander angeordnete Paare von Längsstangen - beispielhaft mit 14, 15 bezeichnet -, die einen solchen Abstand zueinander haben, daß Räder - beispielhaft mit 16 bezeichnet - stehend eingestellt werden können, wie dies aus Fig. 2 ersichtlich ist. Die Regale 9, 10 lassen einen Mittelgang frei, der es erlaubt, die Räder 16 aus den Regalen 9, 10 zu entnehmen und über die Tür 8 nach außen zu rollen bzw. einzurollen und in die Regale 9, 10 einzulagern.

Das in Fig. 3 dargestellte Fahrzeug ist in seiner Grundform ein Kleinlastwagen mit zwei Vordersitzen 18, 19 und einem anschließenden Behandlungsraum 20. Beide können über eine Trennwand separiert sein. Am Heck weist das Fahrzeug 17 zwei Hecktüren 21, 22 auf, über die sich der Behandlungsraum 20 öffnen läßt. Zusätzlich sind innenseitig zwei sich überlappende, biegsame Kunststoff vorhänge 23, 24 vorgesehen, die einen Luftaustausch bei geöffneten Hecktüren 21, 22 behindern. Der Behandlungsraum 20 ist mit einer Standheizung versehen. Ferner weist das Fahrzeug einen Außenanschluß für Strom und Verteilerkasten auf, über die die in dem Behandlungsraum 20 stehenden Geräte betrieben werden können.

Etwa in der Mitte weist der Behandlungsraum 20 im Boden eine Aluminiumwanne 25 auf, die mit einem Ablaßhahn versehen ist und sich über die gesamte Breite des Behandlungsraums 20 erstreckt. Zu dieser Aluminiumwanne 25 führt eine Zulaufrinne 26, welche in gezeigtem Zustand über das Heck des Fahrzeuges 17 hinaus ausgefahren ist. Auf diese Zulaufrinne 26 können Räder 16 aufgesetzt und dann in Richtung auf das Innere des Behandlungsraums 20 gerollt werden. Im innenliegenden Teil der Zulaufrinne 26 sind jeweils paarweise Sprühköpfe 27, 28, 29, 30 angeordnet, und zwar in der Weise, daß über sie Felgenreiniger auf die Felgen der Räder 16 aufgesprüht werden kann. Dies kann automatisch beispielsweise mit Hilfe von Lichtschranken geschehen.

Die Zulauf rinne 26 endet vor einer Waschkammer 31, in die ein Rad 16 über eine Tür eingerollt werden kann. Nach Schließen der Tür wird das Rad 16 in der Waschkammer 31 mit beheiztem Wasser besprüht und hierdurch gewaschen. Die Waschkammer 31 hat hierfür einen Frischwassertank 32 und einen hier nicht näher dargestellten Abwassertank. Nach dem Waschvorgang schließt sich ein Trockenvorgang an. Hierzu weist die Waschkammer 31 Blasdüsen auf, die von einem Kompressor gespeist sind.

Nach dem Wasch- und Trockenvorgang wird das jeweilige Rad 16 wieder aus der Waschkammer 31 herausgenommen und auf eine Prüf- und Meßplatte 33 stehend aufgesetzt. Die Prüfund Meßplatte 33 ist um eine vertikale Achse drehbar, so daß sich das jeweilige Rad 16 um diese Achse verschwenken läßt. Außerdem ist die Radaufnahme der Prüf- und Meßplatte 33 so ausgebildet, daß das Rad 16 auch um seine horizontale Achse gedreht werden kann. Beide Bewegungsmöglichkeiten geben der Bedienungsperson die Möglichkeit, Reifen und Felgen auf Beschädigungen und Abnutzung optisch zu überprüfen und dabei auch Fremdkörper, beispielsweise Glas, Steine etc., zu entfernen, soweit dies möglich ist. Eine entsprechende Beleuchtung erleichtert dies. Außerdem wird der Luftdruck gemessen und die Profiltiefe mit Hilfe eines Lasermeßgerätes erfaßt. Des weiteren steht dort - was hier nicht näher dargestellt ist - eine Blaspistole mit Spiralschlauch und Luftdruckprüfer zur Verfügung, die mit einem Lufttank verbunden ist.

Die Bedienungsperson hat eine Sammlung von Barcodes zur Verfügung, die Reifenfabrikaten, Felgenfabrikaten, den verschiedenen möglichen Abnutzungserscheinungen und Beschädigung sowie den unterschiedlichen Profiltiefen entsprechen. Die jeweils zutreffenden Barcodes werden von dem Barcodeleser erfaßt und hierdurch in einem EDV-Gerät - nicht näher dargestellt - eingespeichert. Hinzu kommen weitere Daten, wie Kundennummer, Fahrzeugkennzeichen, Radposition etc.

Nach Erfassung aller relevanten Daten wird das jeweilige Rad 16 auf eine Auslaufrinne 34 gesetzt, die ebenfalls über das Heck des Fahrzeuges 17 ausgezogen und in diese Richtung abwärts geneigt ist. Am Ende der Auslaufrinne 34 können Stopper vorgesehen werden, die das jeweils abrollende Rad 16 abbremsen.

Neben der Waschkammer 31 befindet sich eine Arbeitsplatte 35. Hier kann das EDV-Gerät abgestellt sein. Außerdem ist in der Mitte neben der Prüf- und Meßplatte 33 ein Drehstuhl 36 angeordnet.

Hier nicht dargestellt ist ein in dem Fahrzeug 17 mitgeführter Transportkarren, mit dem die Räder 16 aus dem bzw. in den Container 1 transportiert werden können. Die gereinigten und geprüften Räder 16 werden an einem freien Platz im Container 1 eingelagert, wobei der Einlagerungsort ebenfalls in dem EDV-Gerät eingespeichert wird. Anschließend wird ein Arbeitsprotokoll ausgedruckt, aus dem sich die eingespeicherten Daten in geordneter Form ersehen lassen. Zusätzlich werden die Daten täglich in einen Zentralrechner überspielt und den dort schon vorhandenen Daten je Container 1 zugeordnet. Der dann erstellte Ausdruck gibt dem Besitzer des Containers 1 einen Überblick über die eingelagerten Räder 16 und deren Zustand.

Mit dem Fahrzeug 17 können eine Vielzahl von Containern 1 abgefahren und die jeweils zuvor eingelagerten Räder 16 gereinigt und überprüft werden. Auf diese Weise können die Einrichtungen in dem Fahrzeug 17 über die gesamte Saison ausgenutzt werden.

## Patentansprüche

1. Verfahren zur Überprüfung, Pflege und Lagerung von gebrauchten Kraftfahrzeugrädern (16), bei dem die Räder (16) in wenigstens einem Lagergehäuse (1) mit Lagerregalen (9, 10) eingelagert und in einer Reinigungseinrichtung (31) gereinigt werden, wobei in einer EDV-Einrichtung der Ort der Einlagerung und Raddaten erfaßt werden und zusätzlich mittels einer Prüf- und Meßeinrichtung (33) Zustandsdaten über die Räder (16) ermittelt werden und dabei über einen Drucker ein Radprotokoll ausgedruckt wird, **dadurch gekennzeichnet, daß** Rad- und Zustandsdaten zunächst in ein tragbares oder auf einem Fahrzeug angeordnetes EDV-Gerät eingegeben und in einen Zentralrechner weitergegeben werden, aus dem eine Liste der eingelagerten Räder (16) mit erfaßten Daten entnehmbar ist.

2. Einrichtung zur Überprüfung und Pflege von Kraftfahrzeugrädern, mit wenigstens einer Reinigungseinrichtung (31) zur Reinigung der Räder (16), mit wenigstens einer Prüf- und Meßeinrichtung (33) zur Erfassung von Daten über die Räder (16), und mit wenigstens einer EDV-Einrichtung zur Eingabe von Zustandsdatensätzen über jedes Rad (16), **dadurch gekennzeichnet, daß** die Einrichtung auf einem Kraftfahrzeug (17) angeordnet ist.

3. Einrichtung nach Anspruch 2, **dadurch gekennzeichnet, daß** jede EDV-Einrichtung auch einen Drucker zur Ausgabe von Radprotokollen mit den Datensätzen aufweist.

4. Einrichtung nach Anspruch 2, **dadurch gekennzeichnet, daß** einer Vielzahl von Lagergehäusen (1) mehrere solcher Kraftfahrzeuge (17) zugeordnet sind.

5. Einrichtung nach einem der Ansprüche 2 bis 4, **dadurch gekennzeichnet, daß** die Reinigungseinrichtung eine Reinigungskammer (31) mit Spritzdüsen für eine Reinigungsflüssigkeit aufweist.

6. Einrichtung nach einem der Ansprüche 2 bis 5, **dadurch gekennzeichnet, daß** die Reinigungseinrichtung (31) eine Sprüheinrichtung (27, 28, 29, 30) zum Aufbringen von Felgenreiniger aufweist.

7. Einrichtung nach Anspruch 5 oder 6, **dadurch gekennzeichnet, daß** die Sprüheinrichtung (27, 28, 29, 30) vor dem Eingang der Reinigungskammer (31) angeordnet ist.

8. Einrichtung nach einem der Ansprüche 2 bis 7, **dadurch gekennzeichnet, daß** die Reinigungseinrichtung (31) eine Zulaufrinne (26) aufweist, in der mehrere Räder (16) hintereinanderstehend aufreihbar sind.

9. Einrichtung nach Anspruch 7 und 8, **dadurch gekennzeichnet, daß** die Sprühreinrichtung (27, 28, 29, 30) im Bereich der Zulaufrinne (26) angeordnet ist.

10. Einrichtung nach einem der Ansprüche 2 bis 9, **dadurch gekennzeichnet, daß** die Reinigungseinrichtung (31) eine Trockblaseinrichtung aufweist.

11. Einrichtung nach wenigstens den Ansprüchen 5 und 10, **dadurch gekennzeichnet, daß** die Trockenblaseinrichtung in der Reinigungskammer (31) angeordnet ist.

12. Einrichtung nach einem der Ansprüche 2 bis 11, **dadurch gekennzeichnet, daß** die Prüf- und Meßeinrichtung einen Prüf- und Meßplatz (33) für die Auflage des jeweiligen Rades (16) aufweist.

13. Einrichtung nach wenigstens den Ansprüchen 5 und 12, **dadurch gekennzeichnet, daß** der Prüf- und Meßplatz (33) neben dem Ausgang der Reinigungskammer (31) angeordnet ist.

14. Einrichtung nach Anspruch 12 oder 13, **dadurch gekennzeichnet, daß** der Prüf- und Meßplatz (33) eine Radaufnahme für die stehende Halterung eines Rades (16) aufweist.

15. Einrichtung nach Anspruch 14, **dadurch gekennzeichnet, daß** die Radaufnahme um eine vertikale Achse drehbar ist.

16. Einrichtung nach Anspruch 14 oder 15, **dadurch gekennzeichnet, daß** die Radaufnahme drehbar gelagerte Rollen als Auflage für die Räder (16) aufweist.

17. Einrichtung nach einem der Ansprüche 2 bis 16, **dadurch gekennzeichnet, daß** die Prüf- und Meßeinrichtung (33) ein Lüftdruckmeßgerät, ein Luftbefüllgerät, ein Profiltiefenmeßgerät und/oder ein Auswuchtgerät aufweist.

18. Einrichtung nach einem der Ansprüche 2 bis 17, **dadurch gekennzeichnet, daß** sich an die Prüf- und Meßeinrichtung (33) eine Ablaufrinne (34) anschließt.

19. Einrichtung nach einem der Ansprüche 2 bis 18, **dadurch gekennzeichnet, daß** die EDV-Einrichtung als tragbares EDV-Gerät ausgebildet ist.

20. Einrichtung nach Anspruch 19, **dadurch gekennzeichnet, daß** die EDV-Einrichtung einen Barcodeleser aufweist.

21. Einrichtung nach einem der Ansprüche 2 bis 20, **dadurch gekennzeichnet, daß** ein Zentralrechner vorgesehen ist, der mit mehreren EDV-Einrichtungen verbindbar ist.

22. Einrichtung nach einem der Ansprüche 2 bis 21, **dadurch gekennzeichnet, daß** das Lagergehäuse als beweglicher Container (1) ausgebildet ist.

23. Einrichtung nach Anspruch 22, **dadurch gekennzeichnet, daß** der Container (1) eine mittig an der Stirnseite (5) angeordnete Tür (8) und zu beiden Seiten eines Ganges Lagerregale (9, 10) aufweist.

## Claims

1. Process for inspecting, maintaining and storing used motor vehicle wheels (16), in which the wheels (16) are stored in at least one store (1) with storage shelves (9, 10) and cleaned in a cleaning device (31), in which the storage location and wheel data are recorded in an electronic data processing device and details regarding the condition of the wheels also provided by means of a test and measuring device (33) and in which a wheel report is printed by a printer, **characterised by** the fact that the wheel data and details regarding its condition are first input into an electronic data processing device which is portable or on a vehicle and then put into a central computer, from which a list of stored wheels (16) with the data recorded can be taken.

2. Device for inspecting and maintaining motor vehicle wheels with at least one cleaning device (31) for cleaning the wheels (16), with at least one test and measuring device (33) to obtain data on the wheels (16) and with at least one electronic data processing device for inputting details of the condition of each wheel (16), **characterised by** the fact that the device is on a motor vehicle (17).

3. Device according to claim 2, **characterised by** the fact that each electronic data processing device also has a printer for issuing wheel reports with sets of data.

4. Device according to claim 2, **characterised by** the fact that several such motor vehicle wheels (17) are allocated to many stores (1).

5. Device according to claims 2 to 4, **characterised by** the fact that the cleaning device has a cleaning chamber (31) with jets for cleaning fluid.

6. Device according to one of claim 2 to 5, **characterised by** the fact that the cleaning device (31) has a spray device (27, 28, 29, 30) for applying wheel rim cleaner.

7. Device according to claim 5 or 6, **characterised by** the fact that the spray device (27, 28, 29, 30) is before the entry to the cleaning chamber (31).

8. Device according to one of claims 2 to 7, **characterised by** the fact that the cleaning device (31) has a supply channel (26), in which several wheels (16) can be lined up behind each other.

9. Device according to claim 7 and 8, **characterised by** the fact that the spray device (27, 28, 29, 30) is in the area of the supply channel (26).

10. Device according to one of claims 2 to 9, **characterised by** the fact that the cleaning device (31) has a dry blowing device.

11. Device according to at least claims 5 and 10, **characterised by** the fact that the dry blowing device is in the cleaning chamber (31).

12. Device according to one of claims 2 to 11, **characterised by** the fact that the test and measuring device has a test and measuring area (33) to support the relevant wheel (16).

13. Device according to at least claims 5 and 12, **characterised by** the fact that the test and measuring area (33) is near the outlet of the cleaning chamber (31).

14. Device according claim 12 or 13, **characterised by** the fact that the test and measuring area (33) has a wheel holder for holding a wheel (16) upright.

15. Device according to claim 14, **characterised by** the fact that the wheel holder rotates around a vertical axis.

16. Device according to claim 14 or 15, **characterised by** the fact that the wheel holder has rotary rollers on bearings as support for the wheels (16).

17. Device according to one of claims 2 to 16, **characterised by** the fact that the test and measuring device (33) has a compressed air measuring device, an air filling device, a tread depth measuring device and/or a balancing device.

18. Device according to one of claims 2 to 17, **characterised by** the fact that a runoff channel (34) is connected to the test and measuring device (33).

19. Device according to one of claims 2 to 18, **characterised by** the fact that the electronic data processing device is a portable electronic data processing device.

20. Device according to claim 19, **characterised by** the fact that the electronic data processing device has a barcode reader.

21. Device according to one of claims 2 to 20, **characterised by** the fact that a central computer is provided, which can be connected to several electronic data processing devices.

22. Device according to one of claims 2 to 21, **characterised by** the fact that the store is in the form of a moveable container (1).

23. Device according to claim 22, **characterised by** the fact that the container (1) has a door (8) in the middle of the face (5) and storage shelves (9, 10) on both sides of a passageway.

## Revendications

1. Procédé pour vérifier, entretenir et stocker des roues de véhicule automobile usagées (16), selon lequel les roues (16) sont stockées dans au moins un conteneur (1) abritant des étagères (9, 10) et nettoyées dans un dispositif de nettoyage (31), sachant que l'on enregistre dans un ordinateur les emplacements de stockage et les caractéristiques des roues et que l'on détermine en outre au moyen d'un dispositif de contrôle et de mesure (33) des données concernant l'état des roues (16), avant d'imprimer à l'aide d'une imprimante une fiche pour chaque roue, **caractérisé en ce que** les caractéristiques des roues et les données concernant leur état sont tout d'abord enregistrées dans un ordinateur portable ou installé sur un véhicule, avant d'être transmises à un serveur qui peut fournir une liste des roues stockées (16) avec les données les concernant.

2. Dispositif pour vérifier et entretenir des roues de véhicule automobile, comprenant au moins un dispositif de nettoyage (31) pour nettoyer les roues (16), au moins un dispositif de contrôle et de mesure (33) pour relever des données concernant les roues (16), et au moins un ordinateur pour saisir un ensemble de données relatives à l'état de chaque roue (16), **caractérisé en ce que** le dispositif est installé sur un véhicule automobile (17).

3. Dispositif selon la revendication 2, **caractérisé en ce que** chaque ordinateur comporte une imprimante pour imprimer des fiches sur lesquelles figurent les données concernant les roues.

4. Dispositif selon la revendication 2, **caractérisé en ce que** plusieurs véhicules automobiles (17) de ce type sont associés à de nombreux conteneurs (1).

5. Dispositif selon l'une des revendications 2 à 4, **caractérisé en ce que** le dispositif de nettoyage présente une chambre de nettoyage (31) dotée de buses d'aspersion pour un liquide de nettoyage.

6. Dispositif selon l'une des revendications 2 à 5, **caractérisé en ce que** le dispositif de nettoyage (31) comporte un dispositif d'aspersion (27, 28, 29, 30) pour y fixer des nettoyeurs de jantes.

7. Dispositif selon la revendication 5 ou 6, **caractérisé en ce que** le dispositif d'aspersion (27, 28, 29, 30) est placé devant l'entrée de la chambre de nettoyage (31).

8. Dispositif selon l'une des revendications 2 à 7, **caractérisé en ce que** le dispositif de nettoyage (31) présente une goulotte d'amenée (26) dans laquelle plusieurs roues (16) peuvent être rangées les unes à côté des autres.

9. Dispositif selon la revendication 7 et 8, **caractérisé en ce que** le dispositif d'aspersion (27, 28, 29, 30) est placé à proximité de la goulotte d'amenée (26).

10. Dispositif selon l'une des revendications 2 à 9, **caractérisé en ce que** le dispositif de nettoyage (31) comporte un dispositif de séchage à air soufflé.

11. Dispositif selon au moins les revendications 5 et 10, **caractérisé en ce que** le dispositif de séchage à air soufflé est placé dans la chambre de nettoyage (31).

12. Dispositif selon l'une des revendications 2 à 11, **caractérisé en ce que** le dispositif de contrôle et de mesure comporte un emplacement de contrôle et de mesure (33) pour y poser la roue (16).

13. Dispositif selon au moins les revendications 5 et 12, **caractérisé en ce que** l'emplacement de contrôle et de mesure (33) est situé à côté de la sortie de la chambre de nettoyage (31).

14. Dispositif selon la revendication 12 ou 13, **caractérisé en ce que** l'emplacement de contrôle et de mesure (33) présente un réceptacle destiné à immobiliser une roue (16) verticalement.

15. Dispositif selon la revendication 14, **caractérisé en ce que** le réceptacle de la roue peut tourner autour d'un axe vertical.

16. Dispositif selon la revendication 14 ou 15, **caractérisé en ce que** le réceptacle de la roue présente des galets montés de manière à tourner qui servent de support aux roues (16).

17. Dispositif selon l'une des revendications 2 à 16, **caractérisé en ce que** le dispositif de contrôle et de mesure (33) présente un manomètre, un gonfleur, une jauge de profondeur et/ou un banc d'équilibrage.

18. Dispositif selon l'une des revendications 2 à 17, **caractérisé en ce qu'**une goulotte d'évacuation (34) fait suite au dispositif de contrôle et de mesure (33).

19. Dispositif selon l'une des revendications 2 à 18, **caractérisé en ce que** l'ordinateur est réalisé en tant qu'ordinateur portable.

20. Dispositif selon la revendication 19, **caractérisé en ce que** l'ordinateur portable possède un lecteur de codes à barres.

21. Dispositif selon l'une des revendications 2 à 20, **caractérisé en ce qu'**un serveur est prévu, qui peut être relié à plusieurs ordinateurs.

22. Dispositif selon l'une des revendications 2 à 21, **caractérisé en ce que** le conteneur est réalisé en tant que conteneur mobile (1).

23. Dispositif selon la revendication 22, **caractérisé en ce que** le conteneur (1) présente une porte (8) placée au centre de la face frontale (5) et des étagères (9, 10) de part et d'autre d'un couloir.
